(19) Europäisches Patentamt
European Patent Office
Office européen des brevets

(11) **EP 2 796 503 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(51) Int Cl.:
*C08L 27/06* (2006.01)   *C08L 9/02* (2006.01)

(21) Anmeldenummer: **13165650.6**

(22) Anmeldetag: **26.04.2013**

(54) **Zusammensetzungen, enthaltend Thermoplasten auf Basis von Polyvinylchlorid sowie mit Hydroxylgruppen modifizierte, vernetzte NBR-Mikrogele**

Compositions containing thermoplastics based on polyvinyl chloride and cross-linked NBR microgels modified with hydroxyl groups

Compositions contenant des thermoplastiques à base de chlorure de polyvinyle et comprenant des microgels NBR réticulés et modifiés avec des groupes hydroxyles

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.10.2014 Patentblatt 2014/44**

(73) Patentinhaber: **LANXESS Deutschland GmbH 50569 Köln (DE)**

(72) Erfinder:
• **Ziser, Torsten 69469 Weinheim (DE)**
• **Kleinknecht, Harald 55232 Alzey (DE)**
• **Wawrzinski, Lars 68163 Mannheim (DE)**

(56) Entgegenhaltungen:
**US-A- 5 739 203    US-A1- 2007 191 545**

**Beschreibung**

Die vorliegende Erfindung betrifft Zusammensetzungen, enthaltend mindestens einen Thermoplasten auf Basis von Polyvinylchlorid (A) und mindestens ein mittels Radikalbildner photochemisch mit einer Wellenlänge > 0,1 $\mu$m und /oder thermisch, vorzugsweise peroxidisch vernetztem, Hydroxylgruppen-haltiges Mikrogel (B) auf Basis von Polybutadien-Acrylnitril-Copolymerisaten (NBR), ein Verfahren zu ihrer Herstellung und ihre Verwendung zur Herstellung transparenter thermoplastisch verarbeitbarer Formartikel, sowie aus diesen Zusammensetzungen hergestellte Formartikel. Die erfindungsgemäße Zusammensetzungen sind transparent und verfügen über eine hohe Bruchdehnung und eine herausragende Schlagzähigkeit.

Aus US-A 4043958 sind NBR-Kautschuk-PVC-Eisenoxyd-Mischungen beschrieben, die besondere Flammschutzeigenschaften aufweisen. Bei diesen NBR-Kautschuk Mischungen handelt es sich allerdings nur um Mischungen von unvernetzten NBR-Makromolekülen.

Aus EP-A 1664158 ist die Verwendung von modifizierten Mikrogelen in vernetzbaren Medien bekannt. Dieser Herstellweg ist allerdings für PVC aufgrund des niedrigen Siedepunktes (ca. -14°C) und der Karzinogenität von Vinylchlorid nicht anwendbar.

Aus EP-A 1670851 wird der Einsatz von Mikrogelen in organischen Medien beschrieben. Schwerpunkt dieser Arbeiten ist der Einsatz von SBR-Gelen in Polypropylen (PP)-basierten Systemen.

Nachteilig dabei ist jedoch, dass die Anbindung der NBR/PVC-Phasen rein physikalisch ist, was aufgrund der geringen Wechselwirkungskräfte im Vergleich zu einer chemischen Anbindung nachteilig ist. Bei mechanischer Beanspruchung löst sich die physikalische Anbindung und ein vorzeitiges mechanisches Versagen tritt ein.

Zudem sind große Mengen an Mikrogelen notwendig, um thermoplastische Elastomere mit guten Eigenschaftsprofilen zu erhalten. Bei den kostengünstigen Thermoplasten, wie vor allem PVC, wird dadurch der Produktpreis stark erhöht.

Hohe Anteile an Mikrogelen führen zu dem zu ausschließlich opaken Materialien.

Es besteht ein großer Markt für höher preisige, transparente, einfärbbare PVC-Produkte, der so nicht bedient werden kann.

Aufgabe der vorliegenden Erfindung war daher die Bereitstellung von transparenten mikrogelhaltigen Zusammensetzungen, enthaltend Thermoplasten auf Basis von Polyvinylchlorid (PVC), die über eine hohe Bruchdehnung und herausragende Schlagzähigkeit verfügen.

Die neuen Zusammensetzungen sollen zudem im großtechnischen Maßstab herstellbar sein und keine Probleme in Bezug auf die Arbeitssicherheit aufwerfen.

Weiterhin sollte es in den Zusammensetzungen bei schlagartiger Beanspruchung nicht zu Abreißeffekten zwischen Matrix und dispergierter Phase kommen, so dass die mechanischen Eigenschaften, das Quellverhalten und die Spannungsrisskorrosion etc. beeinträchtigt werden. Die Herstellung der Mikrogele für die Zusammensetzungen sollte einfach sein und es erlauben, die Partikelgrößenverteilungen der Mikrogelteilchen gezielt bis zu sehr kleinen durchschnittlichen Partikelgrößen einzustellen.

Überraschenderweise wurde nun gefunden, dass die erfindungsgemäße Aufgabe durch Zusammensetzungen, enthaltend mindestens einen Thermoplasten auf Basis von Polyvinylchlorid (A) und mindestens ein mittels Radikalbildners photochemisch mit einer Wellenlänge > 0,1 $\mu$m und /oder thermisch, vorzugsweise peroxidisch, vernetztes, Hydroxylgruppen-haltiges Mikrogel (B) auf Basis von Polybutadien-Acrylnitril-Copolymerisaten (NBR) erfüllt werden kann.

Die erfindungsgemäßen Zusammensetzungen zeichnen sich durch eine hohe Bruchdehnung und herausragende Schlagzähigkeit und eine sehr gute Verträglichkeit bzw. Dispergierung aus. Letztere äußert sich in einer großen Transparenz.

Durch die Auswahl bestimmter Mikrogele lassen sich zudem die gewünschten Eigenschaften der resultierenden Thermoplaste steuern. Auch kann die Glasübergangstemperatur der dispergierten Mikrogele in den Grenzen von -60°C bis zu weniger als 50°C gezielt eingestellt werden, wodurch wiederum die Eigenschaften der resultierenden Thermoplaste gezielt eingestellt werden können. Dadurch kann auch die Differenz der Glasübergangstemperaturen zwischen dispergierter Phase und kontinuierlicher Phase gezielt eingestellt werden und beispielsweise zwischen 0°C und 250°C betragen.

Die erfindungsgemäßen Zusammensetzungen können zudem durch ein einfaches Verfahren in industriellem Maßstab hergestellt werden.

Gegenstand der vorliegenden Erfindung sind daher Zusammensetzungen, enthaltend mindestens einen Thermoplasten auf Basis von Polyvinylchlorid (A) und mindestens ein mittels Radikalbildners photochemisch mit einer Wellenlänge > 0,1 $\mu$m und /oder thermisch, vorzugsweise peroxidisch, vernetztes, Hydroxylgruppen-haltiges Mikrogel (B) auf Basis von Polybutadien-Acrylnitril-Copolymerisaten (NBR).

Thermoplaste (A)

Bei den Thermoplasten auf Basis von Polyvinylchlorid (PVC) (A) handelt es sich um handelsübliche Polymere, die z.B. als Troilit® erhältlich sind bei der Firma GRANULAT 2000 Kunststoff Compound GmbH & Co KG. Die in der erfindungsgemäßen thermoplastischen Thermoplast-Mikrogel-Zusammensetzung einsetzbaren PVC-Typen (A) schließen beispielsweise Standard-PVC sowie dessen Copolymere ein. Dabei ist sowohl Hart- als auch Weich-PVC einsetzbar, wobei Hart-PVC bevorzugt ist.

Bei dem PVC wird in Hart- oder Weich-PVC unterteilt.

Die mechanische und elektrische Eigenschaften sind wie folgt:

| Vergleichsparameter | PVC-U (PVC hart) | PVC-P (PVC weich) |
|---|---|---|
| Dichte in g/cm$^3$ | 1,38-1,40 | 1,20-1,35 |
| Zugfestigkeit in N/mm$^2$ (nach DIN 53455) | 50-75 | 10-25 |
| Reißdehnung/Reißfestigkeit in % (nach DIN 53455) | 10-50 | 170-400 |

Das im Sinne der Erfindung eingesetzte PVC kann Weichmacher und auch Stabilisatoren enthalten sowie andere Additive, vorzugsweise Antioxidantien, Metalldesaktivatoren, Lichtschutzmittel, vorzugsweise Barium-/Cadmiumsalze, Organozinncarboxylate, 2-Hydroxyphenylbenzotriazole, 2-Hydroxybenzophenone, Oxalanilide und HALS-Verbindungen (Hals = Hindered Alkoxyamine Light Stabilizers), Weichmacher, PVC-Stabilisatoren, Gleitmittel, PVC-Verarbeitungshilfsmittel, Schlagzähigkeitsverbesserer, Füllstoffe und Verstärkungsmittel, Fasern, Farbmittel, Flammschutzmittel und Antistatika.

In einer bevorzugten Ausführungsform der Erfindung weist das eingesetzt Polyvinylchlorid (PVC) keine Weichmacher auf.

Mikrogele (B)

Bei dem in der erfindungsgemäßen Zusammensetzung verwendeten Mikrogel (B) handelt es sich um ein mittels Radikalbildner photochemisch mit einer Wellenlänge > 0,1 $\mu$m und/oder thermisch, vorzugsweise peroxidisch vernetztes, Hydroxylgruppen-haltiges Mikrogel (B).

In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100\%,$$

worin d1 und d2 zwei beliebige Durchmesser des Primärpartikels sind und d1 > d2 ist, bevorzugt weniger als 500 %, bevorzugter weniger als 100 %, noch bevorzugter weniger als 80 %, ganz besonders bevorzugt weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100\%,$$

worin d1 und d2 zwei beliebige Durchmesser des Primärpartikels sind und d1 > d2 ist, von weniger als 500 %, bevorzugt von weniger als 100 %, noch bevorzugter von weniger als 80 %, ganz besonders bevorzugt von weniger als 50 % auf.

Die vorstehend erwähnte Abweichung der Durchmesser der einzelnen Partikel kann nach folgendem Verfahren bestimmt werden. Zunächst wird ein Dünnschnitt der erfindungsgemäßen verfestigten Zusammensetzung hergestellt. Dann wird eine transmissionselektronenmikroskopische Aufnahme bei einer Vergrößerung von beispielsweise 10 000fach oder 200 000fach hergestellt. In einer Fläche von 833,7 x 828,8 nm wird an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In einer bevorzugten Ausführungsform der Erfindung weisen die Primärpartikel des Mikrogels (B) bei dessen Herstellung eine nahezu kugelförmige Geometrie auf, was bedeutet, dass die Differenz zwischen d1 und d2 < 50%, vorzugsweise < 10% ist.

Als Primärpartikel werden nach DIN 53206:1992-08 die durch geeignete physikalische Verfahren (Elektronenmikroskop) als Individuen erkennbare, in der kohärenten Phase dispergierten Mikrogelteilchen bezeichnet.

Der mittlere Durchmesser $d_{50}$ der hergestellten Mikrogele kann mit hoher Genauigkeit beispielsweise auf 0,1 Mikrometer (100 nm) + 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens 75 Gew.- % aller Teilchen liegen um das Maximum der integrierten Korngrößenverteilungskurve (bestimmt durch Lichtstreuung) in einem Bereich von + 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden.

In der erfindungsgemäßen Zusammensetzung weisen die Primärpartikel des Mikrogels (B) bevorzugt einen durchschnittlichen Teilchendurchmesser $d_{50}$ von 5 bis 500 nm, bevorzugter von 20 bis 400 nm, weiter bevorzugt von 20 bis 300 nm, besonders bevorzugt von 20 bis 250 nm, noch bevorzugter von 20 bis 99, ganz besonders bevorzugt 40 bis 80 nm auf (Durchmesserangaben nach DIN 53206) auf. Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99).

Da sich die Morphologie der Mikrogele bei der Weiterverarbeitung der erfindungsgemäßen Zusammensetzung im Wesentlichen nicht verändert oder durch Tempern zurückgewonnen werden kann, entspricht der durchschnittliche Teilchendurchmesser der dispergierten Primärpartikel im Wesentlichen dem durchschnittlichen Teilchendurchmesser der dispergierten Primärpartikel, in den mit der erfindungsgemäßen Zusammensetzung erhaltenen Weiterverarbeitungsprodukten, wie Mikrogel-enthaltenden Kunststoffen.

Auf diese Weise können gewissermaßen maßgeschneiderte, lagerstabile Mikrogelformulierungen als Granulate zur Verfügung gestellt werden, die eine definierte Morphologie, d.h. eine gute Dispergierung der Mikrogele aufweisen und die der Abnehmer leicht in den gewünschten Anwendungen weiterverarbeiten kann. Eine vorherige aufwändige Dispergierung, Homogenisierung oder gar Herstellung der Mikrogele ist nicht mehr erforderlich, weshalb zu erwarten ist, dass derartige Mikrogele auch Anwendung auf Gebieten finden werden, auf denen ihre Anwendung bisher als zu aufwändig erschien.

In der erfindungsgemäßen Zusammensetzung weisen die Mikrogele (B) vorzugsweise in Toluol bei 23°C unlösliche Anteile (Gelgehalt) von mindestens etwa 30 Gew.-%, bevorzugter von mindestens etwa 70 Gew.-%, bevorzugter von mindestens etwa 80 Gew.-%, noch bevorzugter von mindestens etwa 90 Gew.-% auf.

Der in Toluol unlösliche Anteil wird dabei in Toluol bei 23° bestimmt.

Hierbei werden 250 mg des Mikrogels in 20 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstands und der Einwaage und wird in Gewichtsprozent angegeben.

In der erfindungsgemäßen Zusammensetzung weisen die Mikrogele (B) vorzugsweise in Toluol bei 23°C einen Quellungsindex von weniger als etwa 80, bevorzugter von weniger als 60, noch bevorzugter von weniger als 40 auf. So können die Quellungsindizes der Mikrogele (Qi) besonders bevorzugt zwischen 1-15 und 1-10 liegen. Der Quellungsindex wird aus dem Gewicht des in Toluol bei 23° für 24 Stunden gequollenen lösungsmittelhaltigen Mikrogels (nach Zentrifugation mit 20.000 Upm) und dem Gewicht des trockenen Mikrogels berechnet:

Qi = Nassgewicht des Mikrogels /Trockengewicht des Mikrogels.

Zur Ermittlung des Quellungsindex lässt man 250 mg des Mikrogels in 25 ml Toluol 24 h unter Schütteln quellen. Das Gel wird abzentrifugiert und gewogen und anschließend bei 70 °C bis zur Gewichtskonstanz getrocknet und nochmals gewogen.

In der erfindungsgemäßen Zusammensetzung weisen die Mikrogele (B) vorzugsweise Glastemperaturen Tg von -60°C bis +50°C, bevorzugter von -50°C bis +25°C, noch bevorzugter von -40°C bis -15°C auf. In seltenen Fällen können auch Mikrogele verwendet werden, die aufgrund ihres hohen Vernetzungsgrades keine Glastemperatur aufweisen.

Weiterhin weisen die in der erfindungsgemäßen Zusammensetzung eingesetzten Mikrogele (B) bevorzugt eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt. Dies führt dazu, dass die Moduländerung von der Matrixphase zur dispergierten Phase in den aus den erfindungsgemäßen Zusammensetzungen beispielsweise hergestellten Mikrogel-enthaltenden Kunststoff-Zusammensetzungen nicht unmittelbar ist. Hierdurch kommt es bei schlagartiger Beanspruchung dieser Zusammensetzungen nicht zu Abreißeffekten zwischen Matrix und dispergierter Phase, wodurch die mechanischen Eigenschaften, das Quellverhalten und die Spannungsrisskorrosion etc. vorteilhaft beeinflusst werden.

Die Bestimmung der Glasübergangstemperaturen (Tg) und der Breite des Glasübergangs ($\Delta$Tg) der Mikrogele erfolgt durch Differentialthermoanalyse (DTA, engl. Differential-Scanning-Calorimetry (DSC)) unter folgenden Bedingungen:

Für die Bestimmung von Tg und $\Delta$Tg werden zwei Abkühl-/Aufheizzyklen durchgeführt. Tg und $\Delta$Tg werden im zweiten Aufheizzyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und $\Delta$Tg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs $\Delta$Tg erhält man aus der Differenz der beiden Temperaturen.

Die in der erfindungsgemäßen Zusammensetzung enthaltene mittels Radikalbildner photochemisch mit einer Wellenlänge > 0,1 $\mu$m vernetzten Hydroxylgruppen haltigen Mikrogele können an sich in bekannter Weise hergestellt werden, vorzugsweise durch Vernetzung mit Trimethylolpropantrimethacrylat (TMPTMA), Hydroxyethylmethacrylat, Acrylnitril und Butadien. Dabei sind die nach dem Stand der Technik bekannten Verfahren anwendbar, wie beispielsweise beschrieben in EP-A- 405 216, EP-A-854171, DE-A 4220563, GB-PS 1078400, DE-A 197 01 489, DE-A 197 01 488, DE-A 198 34 804, DE-A 198 34 803, DE-A 198 34 802, DE-A 199 19 459, DE-A 199 39 865, DE-A 199 42 620, DE-A 199 42 614, DE-A 100 21 070, DE-A 100 38 488, DE-A 100 39 749, DE-A 100 52 287, DE-A 100 56 311 und DE-A 100 61 174. Unter Mikrogelen werden vorzugsweise Kautschukpartikel verstanden, die insbesondere durch Vernetzung folgender Kautschuke erhalten werden:

NBR: Polybutadien-Acrylnitril-Copolymerisate mit Acrylnitrilgehalten von 10-80 Gew.%, vorzugsweise 15-35 Gew.%, besonders bevorzugt 20 - 30 Gew.% sowie

X-NBR: carboxylierte Nitrilkautschuke.

Die Herstellung der unvernetzten Mikrogel-Ausgangsprodukte erfolgt vorzugsweise durch folgende Methoden:

1. Emulsionspolymerisation,

2. Lösungspolymerisation von Kautschuken, die über Variante 1 nicht zugänglich sind.

In der erfindungsgemäßen Zusammensetzung sind die verwendeten Mikrogele (B) bevorzugt solche, die durch Emulsionspolymerisation erhältlich sind.

Bei der Herstellung der erfindungsgemäß verwendeten Mikrogele auf Basis von Polybutadien-Acrylnitril-Copolymerisaten (NBR) durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. 2-Chlorbutadien, 2,3-Dichlorbutadien, bevorzugt Butadien und Acrylnitril, sowie doppelbindungshaltige Carbonsäuren, vorzugsweise Acrylsäure, Methacrylsäure, Maleinsäure, Itakonsäure etc., doppelbindungshaltige Hydroxyverbindungen, vorzugsweise Hydroxyethylmethacrylat, Hydroxyethylacrylat, Hydroxybutylmethacrylat, aminfunktionalisierte (Meth)acrylate etc.

Die Vernetzung des Kautschukgels kann direkt während der Emulsionspolymerisation, durch Copolymerisation mit vernetzend wirkenden multifunktionellen Verbindungen oder durch anschließende Vernetzung wie untenstehend beschrieben erreicht werden. Die direkte Vernetzung stellt eine bevorzugte Ausführungsform der Erfindung dar. Bevorzugte multifunktionelle Comonomere sind Verbindungen mit mindestens zwei, vorzugsweise 2 bis 4 copolymerisierbaren C=C-Doppelbindungen, vorzugsweise Divinylbenzol. Darüber hinaus kommen in Betracht die Acrylate und Methacrylate von mehrwertigen, vorzugsweise 2- bis 4-wertigen $C_2$ bis $C_{10}$ -Alkoholen, vorzugsweise Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluss an die Emulsionspolymerisation setzt man am besten die Latices ein, die bei der Emulsionspolymerisation erhalten werden. Prinzipiell kann diese Methode auch bei nichtwässrigen Polymerdispersionen angewandt werden, die auf andere Weise wie vorzugsweise durch Umlösung zugänglich sind. Auch Naturkautschuklatices können auf diese Weise vernetzt werden.

Geeignete, thermisch vernetzend wirkende Chemikalien sind beispielsweise organische Peroxide, organische Peroxide, vorzugweise Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoylperoxid, Bis-(2,4-dichlorobenzoyl)-peroxid, t-Butylperbenzoat und /oder organische Azoverbindungen, vorzugsweise Azo-bis-isobutyronitril und Azo-bis-cyclohexannitril und/oder Di- und Polymercaptoverbindungen, vorzugsweise Dimercaptoethan, 1,6-Dimercaptohexan, 1,3,5-Trimercaptotriazin und Mercapto-terminierte Polysulfidkautschuke vorzugsweise Mercapto-terminierte Umsetzungsprodukte von Bis-Chlorethylformal mit Natriumpolysulfid als thermischem Radikalstarter eingesetzt werden.

Die optimale Temperatur zur Durchführung der Nachvernetzung ist naturgemäß von der Reaktivität des Vernetzers abhängig und kann bei Temperaturen von Raumtemperatur bis ca. 180°C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C- Doppelbindung durch Hydrazin wie in US-A 5,302,696 oder US-A 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus.

Man stellt die gewünschten Größen der Mikrogele dadurch her, dass man die Kautschuklösung in einem flüssigen Medium, vorzugsweise in Wasser gegebenenfalls unter Zugabe geeigneter oberflächenaktiver Hilfsmitteln, wie vorzugsweise Tensiden, mittels geeigneter Aggregate mischt, so dass eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten thermisch vernetzend wirkenden Chemikalien, wobei man das für die Herstellung der Dispersion eingesetzte Lösungsmittel gegebenenfalls vor der Vernetzung z. B. destillativ entfernen kann.

Besonders bevorzugte Methoden der Herstellung von hydroxyfunktionellen Mikrogelen auf Basis von NBR ist Pfropfung der NBR-haltigen Mikrogele mit hydroxyfunktionellen Monomeren sowie die Umsetzung mit niedermolekularen Agentien.

Für die Pfropfung der Mikrogele mit hydroxyfunktionellen Monomeren geht man vorzugsweise von der wässrigen Mikrogeldispersion aus, die man mit polaren Monomeren, bevorzugt Hydroxyethyl(meth)acrylat, Hydroxypropyl(meth)acrylat, Hydroxybutyl(meth)acrylat unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, dass das im Modifikationsschritt verwendete Monomer möglichst quantitativ auf das unmodifizierte Mikrogel aufpfropft. Vorzugsweise werden die funktionellen Monomere vor der vollständigen Vernetzung der Mikrogele hinzudosiert.

Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.

Der Hydroxylgruppengehalt der Mikrogele wird durch Umsetzung mit Acetanhydrid und Titration der hierbei frei werdenden Essigsäure mit KOH nach DIN 53240 als Hydroxylzahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180°C, bevorzugt 20-95°C, gegebenenfalls unter Druck von 1-30 bar, durchgeführt werden. Die Modifizierungen können an Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wässriger Dispersion des vernetzten Kautschuks durchgeführt.

Die Aufarbeitung der so hergestellten Mikrogele auf Basis von NBR kann beispielsweise durch Eindampfen, Koagulation, durch Koagulation mit einem weiteren Latexpolymer, durch Gefrierkoagulation (vgl. US-A 2187146) oder durch Sprühtrocknung erfolgen. Bei der Aufarbeitung durch Sprühtrocknung können handelsübliche auch Fließhilfen wie beispielsweise $CaCO_3$ oder Kieselsäure zugesetzt werden.

Die Erfindung schließt auch die Verwendung der erfindungsgemäßen Zusammensetzung als sogenannter Masterbatch (Konzentrat) für die Einarbeitung in thermoplastische Werkstoffe ein. Solche Masterbatche weisen naturgemäß hohe Mikrogelkonzentrationen auf, vorzugsweise von mehr als 30 Gew.-%.

Die erfindungsgemäßen Zusammensetzungen sind erhältlich durch Mischen mindestens eines Thermoplasten auf Basis von PVC (A) und mindestens eines mittels Radikalbildners photochemisch mit einer Wellenlänge > 0,1 $\mu$m und /oder thermisch, vorzugsweise peroxidisch, vernetztem, Hydroxylgruppen haltigem Mikrogel (B) auf Basis von Polybutadien-Acrylnitril-Copolymerisaten (NBR) mittels Extruder.

Als Extruder im Sinne der Erfindung einsetzbar sind Mischextruder. Als Mischaggregat sind vorzugsweise die aus der Kunststoff- und Kautschuktechnologie bekannten Extruder (Saechtling Kunststoff Taschenbuch, 24. Ausgabe, S. 61 und S. 148 ff; DIN 24450; Mischen von Kunststoff- und Kautschukprodukten, VDI- Kunststofftechnik, S. 241ff), wie z.B. Einschneckenextruder (mit speziellen Mischelementen), Doppelschneckenextruder, Kaskadenextruder, Entgasungsextruder, Mehrschneckenextruder, Stiftextruder, und Planetwalzenextruder, geeignet. Bevorzugt werden gleichsinnig drehende Doppelschneckenextruder mit Entgasung (Planetwalzenextruder mit Entgasung) verwendet.

In der erfindungsgemäßen Zusammensetzung beträgt das Gewichtsverhältnis Thermoplast PVC (A) zu Mikrogel (B) vorzugsweise von 99 : 1 bis 60 : 40, bevorzugt 98 : 2 bis 75:25, besonders bevorzugt 97 : 3 bis 85 : 15.

Gegenstand der Erfindung sind zudem Zusammensetzungen, erhältlich durch Mischen mindestens eines Thermoplasten auf Basis von Polyvinylchlorid (A) und mindestens eines mittels Radikalbildners photochemisch mit einer Wellenlänge > 0,1 $\mu$m und /oder thermisch, vorzugsweise peroxidisch, vernetztem, Hydroxylgruppen haltigem Mikrogel (B) auf Basis von Polybutadien-Acrylnitril-Copolymerisaten (NBR) (B).

Herstellung der erfindungsgemäßen Zusammensetzungen

Die vorliegende Erfindung betrifft weiterhin ein Verfahren zur Herstellung der erfindungsgemäßen Zusammensetzungen durch Mischen mindestens eines Thermoplasten (A) auf Basis von Polyvinylchlorid (PVC) und mindestens eines mittels Radikalbildners photochemisch mit einer Wellenlänge > 0,1 $\mu$m und /oder thermisch, vorzugsweise peroxidisch, vernetztem, Hydroxylgruppen-haltigem Mikrogel (B) auf Basis von Polybutadien-Acrylnitril-Copolymerisaten (NBR)mittels Extruder. Die Herstellung der erfindungsgemäßen Zusammensetzungen erfolgt im allgemeinen so, dass das Mikrogel (B) vor dem Mischen mit dem PVC (A) separat hergestellt wird.

Geeignete Mischaggregate sind vorzugsweise Mischextruder. Als Mischaggregat sind vorzugsweise die aus der Kunststoff- und Kautschuktechnologie bekannten Extruder (Saechtling Kunststoff Taschenbuch, 24. Ausgabe, S. 61 und S. 148 ff; DIN 24450; Mischen von Kunststoff- und Kautschukprodukten, VDI- Kunststofftechnik, S. 241ff.), vorzugsweise Einschneckenextruder (mit speziellen Mischelementen), Doppelschneckenextruder, Kaskadenextruder, Entgasungsextruder, Mehrschneckenextruder, Stiftextruder, und Planetwalzenextruder, geeignet. Bevorzugt werden gleichsinnig drehende Doppelschneckenextruder mit Entgasung (Planetwalzenextruder mit Entgasung) verwendet.

Die weitere Abmischung der erfindungsgemäßen Zusammensetzungen aus modifiziertem Mikrogel (B) und dem PVC (A) mit zusätzlichen Füllstoffen sowie gegebenenfalls üblichen Hilfsmitteln, wie oben erwähnt, kann in üblichen Mischextrudern, durchgeführt werden. Bevorzugte Mischtemperaturen liegen bei Raumtemperatur (23°C) bis 280°C, bevorzugt bei etwa 60°C bis 200°C.

Die Erfindung betrifft weiterhin die Verwendung der erfindungsgemäßen Zusammensetzungen zur Herstellung von thermoplastisch verarbeitbaren Formartikeln sowie die aus den erfindungsgemäßen Zusammensetzungen erhältlichen Formartikel. Beispiele derartiger Formartikel schließen ein: Steckverbindungen, Dämpfungs-, insbesondere Schwingungs- und Stoßdämpfungselemente, akustische Dämpfungselemente, Profile, Folien, insbesondere dämpfende Folien, Fußmatten, Bekleidung, insbesondere Schuheinlagen, Schuhe, insbesondere Skischuhe, Schuhsohlen, elektronische Bauteile, Gehäuse für elektronische Bauteile, Werkzeuge, Dekorative Formkörper, Verbundwerkstoffe, Formteile für Automobile etc.

Die erfindungsgemäßen Formartikel können aus den erfindungsgemäßen Zusammensetzungen durch übliche Verarbeitungsverfahren für Thermoplast-Mikrogele hergestellt werden, vorzugsweise durch Schmelzextrusion, Kalandrieren, Injection Moulding (IM), Compression Moulding (CM) und Reaction Injection Moulding (RIM).

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die vorliegende Erfindung wird durch die folgenden Beispiele weiter erläutert. Die Erfindung ist jedoch nicht auf den Offenbarungsgehalt der Beispiele beschränkt.

Einsatzstoffe:

- Baymod® N XL 38.43, ein unmodifizierter NBR-Kautschuk der Firma Lanxess Deutschland GmbH.

- Nanoprene® B M75-OH-VP ein mit Hydroxylgruppen modifiziertes, peroxidisch vernetztes, nanoskaliges BR-Elastomer der Firma Lanxess Deutschland GmbH.

- Polyvinylchlorid (PVC, Troilit®1003), ein PVC der Firma GRANULAT 2000 Kunststoff Compound GmbH & Co. KG.

- EDTA= Ethylendiamintetraessigsäure der Firma Merck-Schuchardt.

- Eisen(II)sulfat•$7H_2O$ der Firma Merck-Schuchardt.

- Diethylhydroxylamin der Firma Sigma Aldrich.

- HEMA= Hydroxyethylmethacrylat der Firma Sigma Aldrich.

- p-Menthanhydroperoxid (Trigonox® NT 50) der Firma Akzo-Degussa.

- Natriumformaldehyd¬sulfoxylat-hydrat (Rongalit®) der Firma Merck-Schuchardt.

- Trinatrium¬phosphat•12H2O der Firma Benckiser.

- Trimethylolpropantrimethacrylat (TMPTMA) der Firma Lanxess Deutschland GmbH.

- Mersolat® K30/95: die Na-Salze einer Mischung von langkettigen Alkylsulfonsäuren der Firma Bayer MaterialScience AG.

1. <u>Herstellung</u> von <u>Mikrogelen (B)</u>

Herstellungsbeispiel 1 für Hydroxylgruppen haltiges NBR-basierendes Mikrogel aus thermischer/peroxidischer Vernetzung mittels TMPTMA (Micromorph® 20).

Für die Herstellung des Mikrogels wurden folgende Monomere in den genannten Gewichtsverhältnissen eingesetzt: 68,8 Gew.-% Butadien, 26,7 Acrylnitril, 3,0 Gew.-% TMPTMA und 1,5 Gew.-% HEMA.

Es wurden 172 g Mersolat® K30/95 in 12,427 kg Wasser gelöst und in einem 40 l Autoklaven vorgelegt. Der Autoklav wurde dreimal evakuiert und mit Stickstoff beaufschlagt. Danach wurden 2957 g Butadien, 1150 g Acrylnitril, 129 g TMPTMA (90 %ig), 64,5 g HEMA (96 %) zugegeben. Die Reaktionsmischung wurde unter Rühren auf 30°C aufgeheizt. Anschließend wurde eine wässrige Lösung bestehend aus 45 g Wasser, 500 mg EDTA, 500 mg Eisen(II)sulfat•$7H_2O$, 1,00 g Natriumformaldehydsulfoxylathydrat (Rongalit® Merck-Schuchardt) und 1,5 g Trinatriumphosphat•12H2O zudosiert.

Die Reaktion wurde durch Zugabe von 3,0 g Trigonox® NT 50 in 200 g Wasser gestartet, wobei mit 185 g Wasser nachgespült wurde. Nach 2,5 Stunden Reaktionszeit wurde die Reaktionstemperatur auf 40°C erhöht. Nach einer weiteren Stunde Reaktionszeit wurde mit 350 mg Trigonox® NT 50, das in einer wässrigen Lösung von 25 g Wasser und 1,25 g Mersolat K30/95 gelöst war, nachaktiviert. Hierbei wurde die Polymerisationstemperatur auf 50°C erhöht. Nach Erreichen eines Polymerisationsumsatzes > 95 % wurde die Polymerisation durch Zugabe einer wässrigen Lösung von 53 g Diethylhydroxylamin gelöst in 100 g Wasser, abgestoppt. Danach wurden nicht umgesetzte Monomeren durch Strippen mit Wasserdampf aus dem Latex entfernt.

Der Latex wurde filtriert und wie im Beispiel 2 der US-A 6,399,706 mit Stabilisator versetzt, koaguliert und getrocknet.

Vor Einsatz des Mikrogels wurde es in einem Vakuumtrockenschrank der Firma Heraeus Instruments, Typ Vacutherm VT 6130, bei 100 mbar bis zur Gewichtskonstanz getrocknet.

**Tabelle 1**: Eigenschaften der Mikrogele (B)

| Herstellungsbeispiel | Mikrogel-Typ | Anteil TMPTMA für Vernetzung [phr] | $d_{50}$ [nm] | $O_{spez}$ [m²/g] | Dichte [g/cm³] | Gelgehalt [Gew.-%] | QI | Tg [°C] | ΔTg [°C] | OH-Zahl [mg KOH/g Pol.] | Säurezahl |
|---|---|---|---|---|---|---|---|---|---|---|---|
| 1 | OH-NBR | 3 | 64 | 102 | 0,974 | 92 | 8 | -34 | 11 | 7 | 7 |
| 2 | OH-BR | 4 | 51 | 127 | 0,929 | 92 | 1 3 | -76 | 13 | 28 | 7 |
| phr: parts per 100 rubber | | | | | | | | | | | |

Messmethoden:

Zur Bestimmung der physikalischen Parameter der hergestellten Mikrogel-Latices wurden folgenden Messmethoden angewandt:

$d_{50}$: Der Durchmesser $d_{50}$ ist nach DIN 53 206 als der Wert definiert, bei welchem die Hälfte aller Teilchengrößen liegt. Der Teilchendurchmesser der Latexteilchen wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Durchmesserangaben im Latex und für die Primärpartikel in den erfindungsgemäßen Zusammensetzungen sind praktisch gleich, da sich die Teilchengröße der Mikrogelteilchen bei der Herstellung der erfindungsgemäßen Zusammensetzung praktisch nicht ändert.

$O_{spez}$: spezifische Oberfläche in $m^2/g$

Dichte: in $g/cm^3$ bei 20°C

Gelgehalt

Der Gelgehalt entspricht dem in Toluol unlöslichen Anteil bei 23°C. Er wurde wie oben beschrieben bestimmt.

Quellungsindex

Qi (Quellungsindex)= Nassgewicht des Mikrogels /Trockengewicht des Mikrogels. Der Quellungsindex QI wurde wie folgt bestimmt:

Der Quellungsindex wurde aus dem Gewicht des in Toluol bei 23° für 24 Stunden gequollenen Lösungsmittelhaltigen Mikrogels und dem Gewicht des trockenen Mikrogels berechnet:

Zur Ermittlung des Quellungsindex ließ man 250 mg des Mikrogels in 25 ml Toluol 24 h unter Schütteln quellen. Das mit Toluol gequollene (nasse) Gel wurde nach Zentrifugation mit 20.000 Upm gewogen und anschließend bei 70°C bis zur Gewichtskonstanz getrocknet und nochmals gewogen (trockenes Mikrogel).

Glastemperatur Tg : Für die Bestimmung von Tg wurde das Gerät DSC-2 von Perkin-Elmer benutzt.
Breite des Glasübergangs ΔTg: Für die Bestimmung von ΔTg wurde das Gerät DSC-2 von Perkin-Elmer benutzt.

OH-Zahl (Hydroxylzahl)

Die OH-Zahl (Hydroxylzahl) wurde nach DIN 53240 bestimmt, und entspricht der Menge an KOH in mg, die der Essigsäure-Menge äquivalent ist, die bei der Acetylierung mit Essigsäureanhydrid von 1 g Substanz freigesetzt wurde.

Säurezahl

Die Säurezahl wurde nach DIN 53402 bestimmt und entspricht der Menge KOH in mg, die erforderlich ist um 1 g des Polymers zu neutralisieren.

2. Herstellung der mikrogelhaltigen Zusammensetzungen und deren Charakterisierung

Beispiel 1

Als Referenz zu den Thermoplast-Mikrogel-Zusammensetzungen wurde ein zur PVC-Modifizierung am Markt käuflich verfügbares Material, nämlich Baymod® N XL 38.43, eingesetzt.
Die Herstellung der mikrogelhaltigen Zusammensetzungen erfolgte in einem Doppelschneckenextruder (ZSK 27 HP, Hersteller Leistritz; Schneckendurchmesser d = 27 mm, L/D > 56) mit gleichsinnig laufenden Wellen. Das Mischen erfolgte bei einer Drehzahl von 300 U/min und einem Durchsatz von 15 kg/h. Die Temperierung der Extruderzonen (L/D Verhältnis je Zone = 4), kurz Z, betrug: Z00=gekühlt, Z01=160°C, Z02=170°C, Z03=170°C, Z04=160°C, Z05=150°C, Z06=145°C, Z07=145°C, Z08=145°C, Z09=145°C, Z10=145°C, Z11=145°C, Z12=145°C, Z13=150°C, Z14=160°C. Es werden Mischungen aus Micromorph® 20P / Troilit® 1003, Nanoprene® B M75-OH-VP / Troilit® 1003 und Baymod® N XL 38.43 / Troilit® 1003 im Gewichtsverhältnis von jeweils 5/95%, 10/90%, 15/85% hergestellt; als Referenz wurde mit dem reinen Troilit® 1003 auf gleiche Weise verfahren. Die Extrusion erfolgte bei allen Mischungen gleich. Hierzu wurde zuerst das Troilit® 1003 kontinuierlich über eine gravimetrische Dosierwaage in die Extruderzone Z00 vorgelegt. In der Z05 wurde dann unter Verwendung einer weiteren gravimetrischen Dosierwaage das jeweilige Micromorph mittels einer Seitenfütterungseinheit in den Extruder kontinuierlich zugegeben. Nach dem Extrusionsprozess wurden zwei optisch homogene Stränge in ein Wasserbad zur Abkühlung geführt und mittels Stranggranulator pelletiert.

Spritzauss:

Nach Trocknung der Materialien wurden diese zu F3 Normprüfzugstäbe an der Spritzgussmaschine Allrounder 320S der Firma Arburg verarbeitet. Die Maschinentemperatur betrug 195°C, bei einem Staudruck von 5 bar und einer Werkzeugtemperatur von 80°C.
Es wurden die folgenden Messmethoden für alle nachstehend genannten Proben in den Beispielen angewandt:

Shore D-Härte

Die Prüfkörper wurden vor der Messung 1 h bei RT konditioniert. Im Rahmen der Messgenauigkeit zeigen die Proben mit Mikrogel keine signifikanten Änderungen der Shore A-Härte. Die ermittelten Werte sind in Tabelle 2 zusammengefasst.

Zugversuch

Der Zugversuch der Proben erfolgte an F3-Normprüfstäbe (s. o.) entsprechend DIN 53455. Die Prüfung wurde mit einer Universalprüfmaschine (Typ 1445, Fa. Frank) mit optischen Längenaufnehmern durchgeführt. Der Messbereich des Kraftaufnehmers betrug 0-1000 N. Die Ergebnisse der Messungen sind in der Tabelle 2 zusammengestellt.
Hierbei waren folgende Maschinenparameter vorgegeben:

- Vorkraft: 0,1 N

- Geschw. bis Vorkraft: 1 mm/min

- Last: 1000 N

- Prüfgeschwindigkeit: 200 mm/min

Kerbschlagzähigkeit:

Zur Bestimmung der Widerstandsfähigkeit der Materialien gegen schlagartige (dynamische) Beanspruchung wurde an den Materialien eine Kerbschlagzähigkeitsanalyse mit dem Gerät HIT5.5P der Firma Zwick / Roell unter Verwendung eines Pendels nach Charpy mit 4 J bei Raumtemperatur durchgeführt. Die Einkerbung erfolgte normgerecht mit einer entsprechenden Peripherie der Firma Zwick / Roell.
Die erhaltenen Zusammensetzungen/Prüfkörper zeigten die in Tabelle 2 aufgeführten folgende Eigenschaften:

**Tabelle 2:** Ergebnisse der physikalischen Prüfung der untersuchten erfindungsgemäßen Thermoplast-Mikrogel-Zusammensetzungen (E1 bis E3), der Vergleichsmischungen (V2 bis V4 bis V7) sowie des reinen PVCs (V1)

| Versuch Nr. | Materialien | KZE (Charpy DIN 53753) (Versuchsaufbau) | Schlagzähigkeit | Bruchdehnung [%] | Shore D-Härte |
|---|---|---|---|---|---|
| V1 | Troilit® 1003 | Gekerbt, Pendel Charpy 4J | 3,3 | 3,8 | 81 |
| E1 (NBR) | 5 % Micromorph® 20[1)] | Gekerbt, Pendel Charpy 4 J | 6,7 | 4,9 | 82 |
| E2 | 10 % Micromorph® 20[1)] | Gekerbt, Pendel Charpy 4 J | 16,8 | 10,6 | 80 |
| E3 | 15 % Micromorph® 20[1)] | Gekerbt, Pendel Charpy 4 J | 102,5 | 20,4 | 75 |

(fortgesetzt)

| Versuch Nr. | Materialien | KZE (Charpy DIN 53753) (Versuchsaufbau) | Schlagzähigkeit | Bruchdehnung [%] | Shore D-Härte |
|---|---|---|---|---|---|
| V2 | 5 % N XL 38.43[1] | Gekerbt, Pendel Charpy 4 J | 2,7 | 3,7 | 81 |
| V3 | 10 % N XL 38.43[1] | Gekerbt, Pendel Charpy 4 J | 3,3 | 4,6 | 83 |
| V4 | 15 % N XL 38.43[1] | Gekerbt, Pendel Charpy 4 J | 3,0 | 7,2 | 81 |
| V5 (BR) | 5 % Nanoprene®B M75-OH-VP[1] | Gekerbt, Pendel Charpy 4 J | 3,4 | 8,9 | : 78 |
| 6 V6 | 15 % Nanoprene®B M75-OH-VP1) | Gekerbt, Pendel Charpy 4 J | 5,2 | 17,9 | 76 |
| V7 | 15 % Nanoprene®B M75-OH-VP1) | Gekerbt, Pendel Charpy 4 J | 7.1 | 22,9 | 74 |
| V = Vergleichsversuch, E = erfindungsgemäß; 1) Rest bestand aus Troilit® 1003; Nanoprene® B M-75-OH-VP ist ein BR-Mikrogel | | | | | |

Aus Tabelle 2 ist ersichtlich, dass beide mit Hydroxylgruppen-haltigen Mikrogel modifizierte PVC-Mischungen sowohl dem reinen PVC als auch dem mit dem Handelsprodukt Baymod® N XL 38.43 versehenen PVC deutlich überlegen sind. Durch Zusatz von 5 % Micromorph® 20 zu Troilit® 1003 wird die Kerbschlagzähigkeit um 100 %, durch Zusatz von 10 % Micromorph® 20 um 400 % gesteigert, wobei die Shore D-Härte erhalten blieb.

Beispiel 2 - Transparenz der hergestellten Zuastäbe

Obwohl die Mikrogel-haltigen Prüfplatten eine Eigenfarbe besitzen, blieben die erfindungsgemäßen NBR-haltigen Mikrogele selbst bei einem Gehalt von 15 % Mikrogel durchsichtig, da sie sehr gut dispergiert sind.
Die mit Hydroxylgruppen modifizierten NBR-Mikrogel-PVC-Zusammensetzungen (E1-E3) wiesen gute Transparenz auf, wohingegen die BR-Mikrogel-PVC-Zusammensetzungen (V5-V7) und Baymod N XL 38.43-PVC-Zusammensetzungen (V2-V4) opak sind.
Mit den erfindungsgemäßen Zusammensetzungen lassen sich somit Materialien herstellen, die im Vergleich zu kommerziellen Produkten überragende mechanische Eigenschaften aufweisen und zudem noch transparent sind.

**Patentansprüche**

1.　Zusammensetzung, enthaltend mindestens einem Thermoplasten auf Basis von Polyvinylchlorid (A) und mindestens ein mittels Radikalbildners photochemisch mit einer Wellenlänge > 0,1 μm und /oder thermisch, vorzugsweise peroxidisch, vernetztem, Hydroxylgruppen-haltigem Mikrogel (B) auf Basis von Polybutadien-Acrylnitril-Copolymerisaten (NBR).

2.　Zusammensetzung nach Anspruch 1, **dadurch gekennzeichnet, dass** die Mikrogele eine Abweichung der Durchmesser eines einzelnen Primärpartikels des Mikrogels (B), definiert als

$$[ (d1 - d2) / d2] \times 100 \% \text{ von kleiner als 500\% aufweisen,}$$

worin d1 und d2 Durchmesser dieses Primärpartikels sind, mit der Maßgabe, dass d1 > d2 ist.

3.　Zusammensetzung nach einem der Ansprüche 1 bis 2, **dadurch gekennzeichnet, dass** die Primärpartikel des Mikrogels (B) eine durchschnittliche Teilchengröße $d_{50}$ von 5 bis 500 nm aufweisen.

4.　Zusammensetzung nach einem der Ansprüche 1 bis 3, **dadurch gekennzeichnet, dass** die Mikrogele auf NBR-

12

Basis (B) einen Acrylnitrilgehalt von 10 % bis 80 %, bevorzugt von 15 % bis 35 %, besonders bevorzugt von 20% bis 30 %, aufweisen.

5. Zusammensetzung nach einem der Ansprüche 1 bis 4, **dadurch gekennzeichnet, dass** die Mikrogele (B) in Toluol bei 23°C unlösliche Anteile von mindestens etwa 70 Gew.-% aufweisen.

6. Zusammensetzung nach einem der Ansprüche 1 bis 5, **dadurch gekennzeichnet, dass** die Mikrogele (B) in Toluol bei 23°C einen Quellungsindex von weniger als etwa 80 aufweisen.

7. Zusammensetzung nach einem der Ansprüche 1 bis 6, **dadurch gekennzeichnet, dass** die Mikrogele (B) Glastemperaturen von -60°C bis +50°C aufweisen.

8. Zusammensetzung nach einem der Ansprüche 1 bis 7, **dadurch gekennzeichnet, dass** die Mikrogele (B) eine Breite des Glasübergangsbereichs von größer als etwa 5 °C aufweisen.

9. Zusammensetzung nach einem der Ansprüche 1 bis 8, **dadurch gekennzeichnet, dass** bei der Herstellung der Mikrogele (B) organische Peroxide, vorzugweise Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat und /oder organische Azoverbindungen, vorzugsweise Azo-bis-isobutyronitril und Azo-bis-cyclohexannitril und /oder Di- und Polymercaptoverbindungen, vorzugsweise Dimercaptoethan, 1,6-Dimercaptohexan, 1,3,5-Trimercaptotriazin und Mercapto-terminierte Polysulfidkautschuke, vorzugsweise Mercapto-terminierte Umsetzungsprodukte von Bis-Chlorethylformal mit Natriumpolysulfid, als thermischem Radikalstarter eingesetzt werden.

10. Zusammensetzung nach einem der Ansprüche 1 bis 9, **dadurch gekennzeichnet, dass** die thermische Vernetzung des Mikrogels mit Trimethylolpropantrimethacrylat (TMPTMA) erfolgt.

11. Zusammensetzung nach einem der Ansprüche 1 bis 10, **dadurch gekennzeichnet, dass** das Gewichtsverhältnis PVC (A) / Mikrogel (B) von 99 : 1 bis 60 : 40, bevorzugt 98 : 2 bis 75 : 25, besonders bevorzugt 97 : 3 bis 85 : 15, beträgt.

12. Zusammensetzung nach einem der Ansprüche 1 bis 11, erhältlich durch Mischen mindestens eines Thermoplasten auf Basis von Polyvinylchlorid (A) und mindestens eines mittels Radikalbildners photochemisch mit einer Wellenlänge > 0,1 $\mu$m und/oder thermisch, vorzugsweise peroxidisch vernetzten Hydroxylgruppen-haltigen Mikrogel (B).

13. Verfahren zur Herstellung von Zusammensetzungen nach einem der Ansprüche 1 bis 12 durch Mischen mindestens Thermoplasten auf Basis von Polyvinylchlorid (A) und mindestens eines mittels Radikalbildners photochemisch mit einer Wellenlänge > 0,1 $\mu$m und/oder thermisch, vorzugsweise peroxidisch vernetzten Hydroxylgruppen-haltigen Mikrogels (B) auf der Basis von Polybutadien-Acrylnitril-Copolymerisaten (NBR).

14. Verwendung der Zusammensetzungen nach einem der Ansprüche 1 bis 13 als Masterbatch zur Einarbeitung in thermoplastische Werkstoffe, vorzugsweise zur Herstellung von thermoplastisch verarbeitbaren Formartikeln.

15. Formartikel, erhältlich durch Formen der Zusammensetzungen nach einem der Ansprüche 1 bis 11.

**Claims**

1. Composition which comprises at least one thermoplastic based on polyvinyl chloride (A) and which comprises at least one microgel (B) that has been crosslinked by means of a free-radical generator photochemically by using a wavelength > 0.1 $\mu$m and/or thermally, preferably peroxidically, and that contains hydroxy groups and that is based on polybutadiene-acrylonitrile copolymers (NBR).

2. Composition according to Claim 1, **characterized in that** the deviation of the diameters of an individual primary particle of the microgel (B), defined as

$$[(d1 - d2) / d2] \times 100\% \text{ is smaller than } 500\%,$$

where d1 and d2 are diameters of the said primary particle with the proviso that d1 is > d2.

3. Composition according to Claim 1 or 2, **characterized in that** the median particle size $d_{50}$ of the primary particles of the microgel (B) is from 5 to 500 nm.

4. Composition according to any of Claims 1 to 3, **characterized in that** the acrylonitrile content of the NBR-based microgels (B) is from 10% to 80%, preferably from 15% to 35%, particularly preferably from 20% to 30%.

5. Composition according to any of Claims 1 to 4, **characterized in that** the microgels (B) comprise at least about 70% by weight of fractions insoluble in toluene at 23°C.

6. Composition according to any of Claims 1 to 5, **characterized in that** the swelling index of the microgels (B) in toluene at 23°C is less than about 80.

7. Composition according to any of Claims 1 to 6, **characterized in that** the glass transition temperatures of the microgels (B) are from -60°C to +50°C.

8. Composition according to any of Claims 1 to 7, **characterized in that** the breadth of the glass transition range of the microgels (B) is greater than about 5°C.

9. Composition according to any of Claims 1 to 8, **characterized in that** the production of the microgels (B) uses organic peroxides, preferably dicumyl peroxide, tert-butyl cumyl peroxide, bis(tert-butylperoxyisopropyl)benzene, di-tert-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, tert-butyl perbenzoate and/or organic azo compounds, preferably azobisisobutyronitrile and azobiscyclohexanenitrile and/or di- and polymercapto compounds, preferably dimercaptoethane, 1,6-dimercaptohexane, 1,3,5-trimercaptotriazine and mercapto-terminated polysulfide rubbers, preferably mercapto-terminated reaction products of bischloroethyl formal with sodium polysulfide, as thermal free-radical initiator.

10. Composition according to any of Claims 1 to 9, **characterized in that** the thermal crosslinking of the microgel is achieved by using trimethylolpropane trimethacrylate (TMPTMA).

11. Composition according to any of Claims 1 to 10, **characterized in that** the PVC (A)/ microgel (B) ratio by weight is from 99 : 1 to 60: 40, preferably from 98 : 2 to 75 : 25, particularly preferably from 97 : 3 to 85 : 15.

12. Composition according to any of Claims 1 to 11, obtainable by mixing of at least one thermoplastic based on polyvinyl chloride (A) and of at least one microgel (B) that has been crosslinked by means of a free-radical generator photochemically by using a wavelength > 0.1 $\mu$m and/or thermally, preferably peroxidically, and that contains hydroxy groups.

13. Process for the production of compositions according to any of Claims 1 to 12 by mixing of at least one thermoplastic based on polyvinyl chloride (A) and of at least one microgel (B) that has been crosslinked by means of a free-radical generator photochemically by using a wavelencth > 0.1 $\mu$m and/or thermally, preferably peroxidically, and that contains hydroxy groups, and that is based on polybutadiene-acrylonitrile copolymers (NBR).

14. Use of the compositions according to any of Claims 1 to 13 as masterbatch for incorporation into thermoplastic materials, preferably for the production of thermoplastically processable moulded items.

15. Moulded items obtainable via moulding of the compositions according to any of Claims 1 to 11.

**Revendications**

1. Composition, contenant au moins un thermoplastique à base de polychlorure de vinyle (A) et au moins un microgel (B) contenant des groupes hydroxyle, réticulé au moyen d'agents de formation de radicaux par voie photochimique avec une longueur d'onde > 0,1 $\mu$m et/ou thermique, de préférence peroxydique, à base de copolymères de polybutadiène-acrylonitrile (NBR).

**2.** Composition selon la revendication 1, **caractérisée en ce que** les microgels présentent une déviation des diamètres d'une particule primaire individuelle du microgel (B), définie par

$$[(d1 - d2)/d2] \times 100 \text{ \% de moins de } 500 \text{ \%,}$$

d1 et d2 étant les diamètres de cette particule primaire à condition que d1 > d2.

**3.** Composition selon l'une quelconque des revendications 1 à 2, **caractérisée en ce que** les particules primaires du microgel (B) présentent une taille de particule moyenne $d_{50}$ de 5 à 500 nm.

**4.** Composition selon l'une quelconque des revendications 1 à 3, **caractérisée en ce que** les microgels à base de NBR (B) présentent une teneur en acrylonitrile de 10 % à 80 %, de préférence de 15 % à 35 %, de manière particulièrement préférée de 20 % à 30 %.

**5.** Composition selon l'une quelconque des revendications 1 à 4, **caractérisée en ce que** les microgels (B) présentent des fractions insolubles dans le toluène à 23 °C d'au moins environ 70 % en poids.

**6.** Composition selon l'une quelconque des revendications 1 à 5, **caractérisée en ce que** les microgels (B) présentent un indice de gonflement dans le toluène à 23 °C de moins d'environ 80.

**7.** Composition selon l'une quelconque des revendications 1 à 6, **caractérisée en ce que** les microgels (B) présentent des températures de transition vitreuse de -60 °C à +50 °C.

**8.** Composition selon l'une quelconque des revendications 1 à 7, **caractérisée en ce que** les microgels (B) présentent une largeur de la plage de transition vitreuse de plus d'environ 5 °C.

**9.** Composition selon l'une quelconque des revendications 1 à 8, **caractérisée en ce que** des peroxydes organiques, de préférence du peroxyde de dicumyle, du peroxyde de t-butylcumyle, du bis-(t-butyl-peroxy-isopropyl)benzène, du peroxyde de di-t-butyle, du 2,5-dihydroperoxyde de 2,5-diméthylhexane, du 3,2,5-dihydroperoxyde de 2,5-diméthylhexyne, du peroxyde de dibenzoyle, du peroxyde de bis-(2,4-dichlorobenzoyle), du perbenzoate de t-butyle et/ou des composés azo organiques, de préférence de l'azo-bis-isobutyronitrile et de l'azo-bis-cyclohexane-nitrile et/ou des composés di- et polymercapto, de préférence du dimercaptoéthane, du 1,6-dimercaptohexane, de la 1,3,5-trimercaptotriazine et des caoutchoucs de polysulfure à terminaison mercapto, de préférence des produits de réaction à terminaison mercapto de bis-chloroéthylformal avec du polysulfure de sodium, sont utilisés lors de la fabrication des microgels (B) en tant que démarreurs radicalaires thermiques.

**10.** Composition selon l'une quelconque des revendications 1 à 9, **caractérisée en ce que** la réticulation thermique du microgel a lieu avec du triméthacrylate de triméthylolpropane (TMPTMA).

**11.** Composition selon l'une quelconque des revendications 1 à 10, **caractérisée en ce que** le rapport en poids PVC (A)/microgel (B) est de 99:1 à 60:40, de préférence de 98:2 à 75:25, de manière particulièrement préférée de 97:3 à 85:15.

**12.** Composition selon l'une quelconque des revendications 1 à 11, pouvant être obtenue par mélange d'au moins un thermoplastique à base de polychlorure de vinyle (A) et d'au moins un microgel (B) contenant des groupes hydroxyle, réticulé au moyen d'agents de formation de radicaux par voie photochimique avec une longueur d'onde > 0,1 $\mu$m et/ou thermique, de préférence peroxydique.

**13.** Procédé de fabrication de compositions selon l'une quelconque des revendications 1 à 12 par mélange d'au moins un thermoplastique à base de polychlorure de vinyle (A) et d'au moins un microgel (B) contenant des groupes hydroxyle, réticulé au moyen d'agents de formation de radicaux par voie photochimique avec une longueur d'onde > 0,1 $\mu$m et/ou thermique, de préférence peroxydique, à base de copolymères de polybutadiène-acrylonitrile (NBR).

**14.** Utilisation des compositions selon l'une quelconque des revendications 1 à 13 en tant que mélange maître pour l'incorporation dans des matériaux thermoplastiques, de préférence pour la fabrication d'articles moulés usinables thermoplastiquement.

**15.** Article moulé, pouvant être obtenu par façonnage des compositions selon l'une quelconque des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4043958 A
- EP 1664158 A
- EP 1670851 A
- EP 405216 A
- EP 854171 A
- DE 4220563 A
- GB PS1078400 A
- DE 19701489 A
- DE 19701488 A
- DE 19834804 A
- DE 19834803 A
- DE 19834802 A
- DE 19919459 A
- DE 19939865 A
- DE 19942620 A
- DE 19942614 A
- DE 10021070 A
- DE 10038488 A
- DE 10039749 A
- DE 10052287 A
- DE 10056311 A
- DE 10061174 A
- US 5302696 A
- US 5442009 A
- US 2187146 A
- US 6399706 A

**In der Beschreibung aufgeführte Nicht-Patentliteratur**

- **H.G. ELIAS.** Makromoleküle, Band 2, Technologie. 1992, vol. 2, 99
- **HOUBEN-WEYL.** Methoden der organischen Chemie. vol. 14/2, 848
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250